# EUROPEAN PATENT SPECIFICATION

(11) **EP 0 584 164 B1**
(45) Date of publication and mention of the grant of the patent: **20.03.1996**
(21) Application number: 92910331.5
(22) Date of filing: 14.05.1992
(51) Int. Cl.: H02B 1/24, H01R 25/16, H02G 3/00

(54) **A SYSTEM OF ELECTRICAL OUTLETS AND CONNECTORS**
ELEKTRISCHES ANSCHLUSSSYSTEM MIT STECKERN UND DOSEN
SYSTEME COMPORTANT DES PRISES DE COURANT ELECTRIQUESET DES CONNECTEURS

(30) Priority: 17.05.1991 GB 9110813
(43) Date of publication of application: 02.03.1994
(73) Proprietor: CARADON MK ELECTRIC LIMITED, Basildon Essex SS14 3EA (GB)
(72) Inventor: COLEBROOK, Peter, London N21 1LG (GB)
(74) Representative: Adams, William Gordon
(86) International application number: GB9200870
(87) International publication number: WO9221172

(56) References cited:
- EP-A- 0 046 124
- EP-A- 0 221 672
- EP-A- 0 299 811
- CH-A- 377 419
- FR-A- 1 386 504
- GB-A- 548 373
- US-A- 4 059 773

## Description

The present invention relates to an electrical outlet system having electrical outlets intended for use primarily for electric lighting but which may be used for power outlets.

Various systems are available for providing power outlets at several places along a length of a fitted linear supply device where the outlets may be located movably or semi-permanently. This device is formed as a trunking for mounting at dado height or skirting level in offices or light industrial buildings where it may be needed to rapidly rearrange the outlets. Within the trunking is a triple busbar arrangement into which outlet sockets can be plugged anywhere along the busbar. In a similar linear arrangement busbar systems are available for installation in ceiling voids. There are also track lighting systems where lighting outlets can be clipped into the track at any desired point see EP-A-0 299811. All these provide excellent flexibility as far as locating outlets but switching flexibility is not available since either the track or busbar has to be interrupted to include a switch at a set location or else each outlet has to be individually switched. Where office arrangements are required to be changed this may require the busbar or track arrangement to be changed.

According to the present invention there is provided a system of electrical outlets and connectors comprising a plurality of electrical outlets which are interconnected electrically, each outlet having a plurality of contacts for a power supply characterised in that a first type and a second type of outlet connector are provided and in that each outlet has a switching means permanently provided to normally electrically connect two contacts of the outlet, the switching means being operable by the connection or disconnection of the first type of outlet connector to or from the outlet whilst the connection or disconnection of the second type of outlet connector to or from the outlet will leave the electrical connection of the two contacts intact.

The switching means enables the transfer of electrical control from the feed to the outgoing power supply or from the outgoing power supply to the component supplied, to a location within "reach" of the switching means.

The outlets are preferably mounted on linear support structure the outlets being interconnected electrically to form a limited bar. This enables an arrangement to be constructed with outlet connectors of the first type acting as control switches and outlet connectors of the second type acting as lighting or power outlets. The control switches separate the bar into sections and take "command" of a section preferably in one direction of the bar so as to switch lights plugged in that direction until the next control switch or end of the bar.

Adaptors can be provided which comprise means for connection to the system and having electrical switching means so as to permit the carrying out of logical operations between any one or more electrical components associated with the system. The adaptor can be in the form of an extension with a simple switch control, dimmer, timer or may permit the carrying out of logical operations between an electrical signal present on any connection and an electrical, mechanical, optical or other input to the system.

In a further arrangement of the system separately powered parallel bars may be provided and switch control jumped from bar to bar with if necessary interface isolation between switch control jumpers. In this way power supplies can be of a different level or characteristic whilst switching can still be effected between bars.

Embodiments of the invention will now be described with reference to the accompanying line drawings in which:

Figure 1 shows an outlet system according to the invention with three sockets, one free and the others having a simple control switch and a light respectively.

Figure 2 shows an outlet system as in Fig. 1 but with extension sockets in each of the three sockets.

Figure 3 shows an outlet system as in Fig. 1 but with a simple control switch, a two way control switch and a light the whole arranged for two way switching.

Figure 4 shows an outlet system according to the invention having a pair of busbars with arrangements to transfer control from one bar to another.

Figure 5 shows an outlet system similar to that shown in Figure 4 but in which the arrangements to transfer control include means for duplication on the second bar of a varying or modulated supply that exists on the first busbar.

Figure 6 shows an outlet system similar to that of Fig. 1 with an adaptor introducing a control box.

Figure 7 shows an adaptor inserted in an outlet of the system similar to that of Fig. 1 with a control box in series with an extension socket with the possibility of connecting further control devices, and

Figure 8 shows an adaptor inserted as Fig. 7 but without an extension socket.

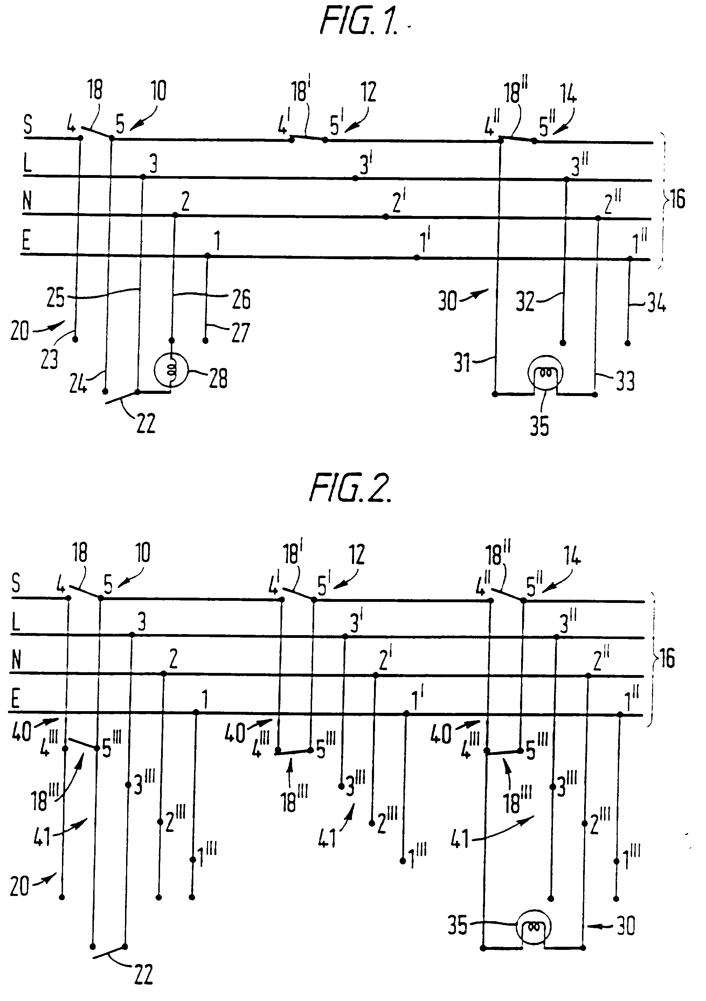

In the arrangement of Figure 1 the system comprises a linear quadruple busbar arrangement 16, busbar S being a switched line, busbar L being connected to a line supply, busbar N being the neutral line and connected to neutral of the supply, whilst E represents the earth line.

Socket positions are indicated at 10, 12 and 14. These are spaced at convenient even distances along the quadruple busbar 16. At each position there are five connecting positions, namely 1 on bar E, 2 on bar N, 3 on bar L and 4 and 5 on bar or line S either side of switch 18 which makes or breaks line S.

Normally switch 18 is in the make position but is operated to break by plugging in at outlet 10 one of a first type of outlet connector wnich in Figure 1 is a control switching device 20. Switching device 20 has its own switch 22 connecting through lines 24 and 25 to positions 5 and 3 respectively. Switching device 20 also has spare lines 26 and 27. If required a locator lamp 28 can be connected across lines 26 and 25.

Outlet 12 is not used in the Figure 1 arrangement switch 18' is left in its normal make condition across positions 4' and 5'.

Outlet 14 is used to receive a second type of outlet connector shown as a lighting outlet connector 30. This second type of connector does not operate switch 18" between 4" and 5" but connects through lines 31, 32, 33 and 34 to positions 4", 3", 2" and 1" respectively. Only lines 31 and 33 are used to power lamp 35.

It will be seen therefore, from Fig. 1 that switching power to lamp 35 at outlet 14 can be achieved by operating switch 20 at outlet 10. Power from line bar L is fed from point 3 to switch 22 to point 5 and thence to point 4" at outlet 14 downstream from point 5 and then via line 31 of lamp 35 connected via line 33 to neutral bar N. It must therefore be seen that control of power to outlets thereby achieved by switch device 20 to any point downstream in the direction of point 4 to 5 until a switch 18 on line S is broken by for instance another device 20.

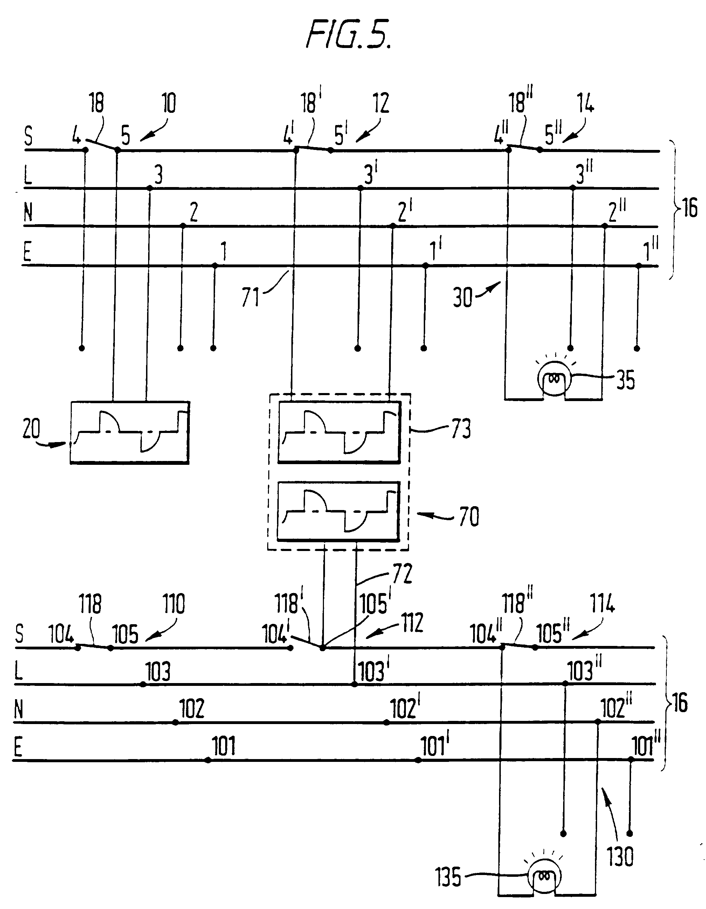

The system is thus designed for uni-directional control although it could in theory be adapted to bi-directional control. The advantage of uni-directional control by switching line S is that installation is easy to comprehend. As will be subsequently explained linear quadruple busbars as described above are conveniently installed in a building so as to be parallel with adjacent quadruple busbars arranged to have their directional control in opposite directions. That is the quadruple busbars are alternatively streamed in opposed directions. Whilst busbars are described above as quadruple they can incorporate furthers bar or lines for three phase power supplies and adjacent bars can be fed with differing phased or charactered power supplies whilst in effect having a common switching line which as will be described with reference to Fig. 5 may incorporate interfaced isolation.

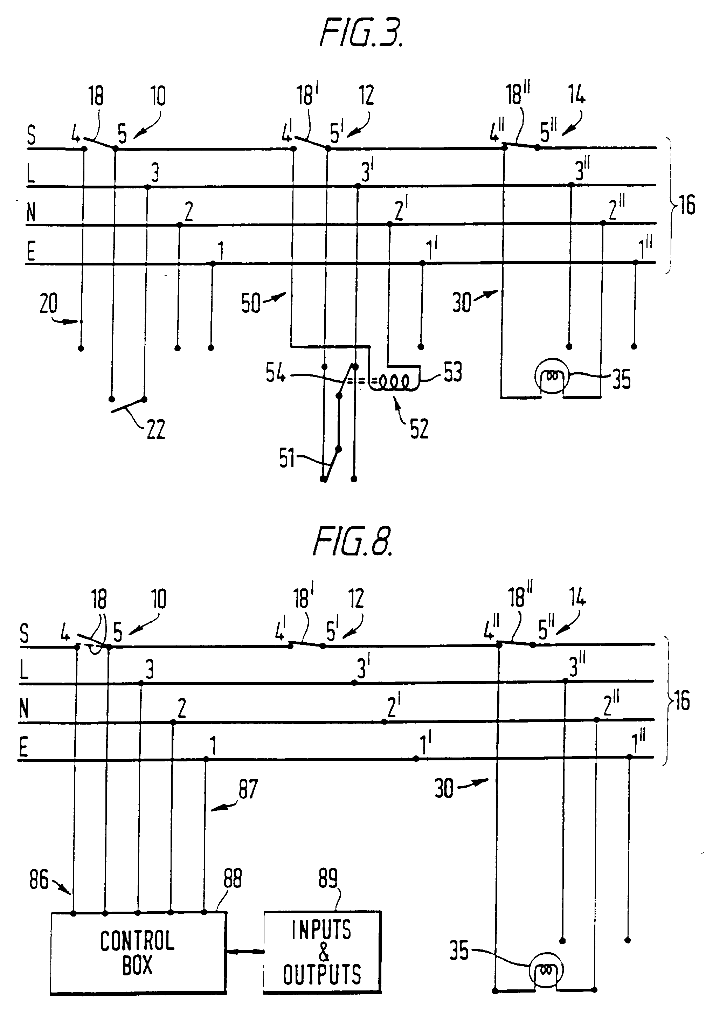

The arrangement in Figure 2 will now be described. This is in effect similar to that of Figure 1 but extension devices 40 of the first type of connector are plugged into sockets 10,12 and 14. Each device 40 has a switch 18"' in effect replacing switches 18, 18' and 18", and each device 40 opens switches 18, 18' and 18". Each device 40 has an outlet socket 41 to receive a switching device 20 of the first type of connector and an outlet connector 30 of the second type of connector.

Effectively the lines S, L, N and E of the quadruple bar are looped out to switches and powered devices.

The arrangement in Figure 3 is such as to provide two way switching into unoccupied socket 12 of the Figure 1 arrangement, a two way switch device 50 of the first type of connector is plugged in. This opens socket switch 18' and transfers control of line S to a manual two way switch 51, device 50 also incorporating a change over relay 52 having a solenoid 53 controlling switch 54. Switches 22 and 51 both control power to downstream lamp 35 of outlet connector 30.

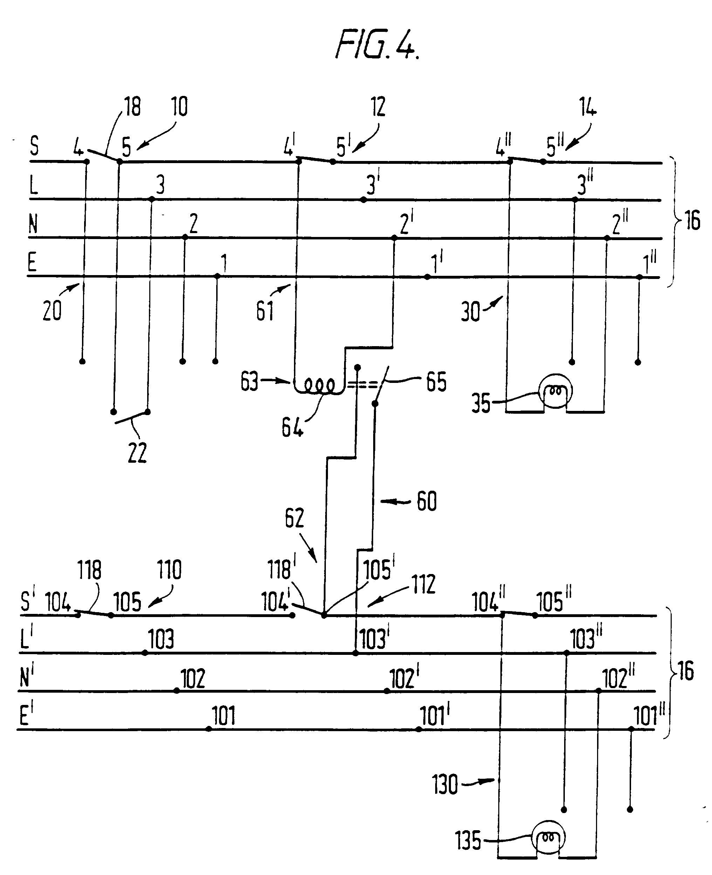

The arrangement of Figure 4 shows how adjacent busbars 16 and 116 can have their switching lines S and S' interconnected by jumper 60 so as to control lighting outlet connector 30 on busbar 16 and connector 130 on busbar 116 by switching device 20 on busbar 16.

Jumper 60 has a first end plug 61 of the second type plugged into socket 12 of busbar 16 which does not open switch 18' and a second end plug 62 of the first type plugged into socket 112 of busbar 116 such that switch 118' in line S' is broken between points 104' and 105'. Jumper 60 also has a relay 63 comprising a solenoid 64 and switch 65. The power to operate lamp 35 comes solely from lines N and L via a switched (i.e. powered) portion of line S of busbar 16 whilst the power to operate lamp 135 comes solely from lines N' and L' of busbar 116 via a portion of line S' switched (i.e. powered) by relay switch 65. Busbars 16 and 116 are both shown streaming the same way but are preferably streamed in opposite directions. Both busbars 16 and 116 are individually powered and can be powered and earthed at either end of lines L, N, E, L', N' and E'. Making switch 22 causes lamp 35 and solenoid 64 to be powered and so powering lamp 135.

In Figure 5 a complex jumper 70 and control or switching device 20' is provided. Device 20' is for example a dimmer switch which modulates or drops the power supply to lamp 35. In order to replicate the supply to lamp 135, jumper 70, plugged by its plugs 71 and 72 into sockets 12 and 112 (as in Fig. 4), has an isolating interface relay device 73 which detects the modified supply across points 4' and 2' of bar 16 and relays this to points 105' and 103' on bar 116. Both lamps 35 and 135 are therefore similarly controlled by device 20'.

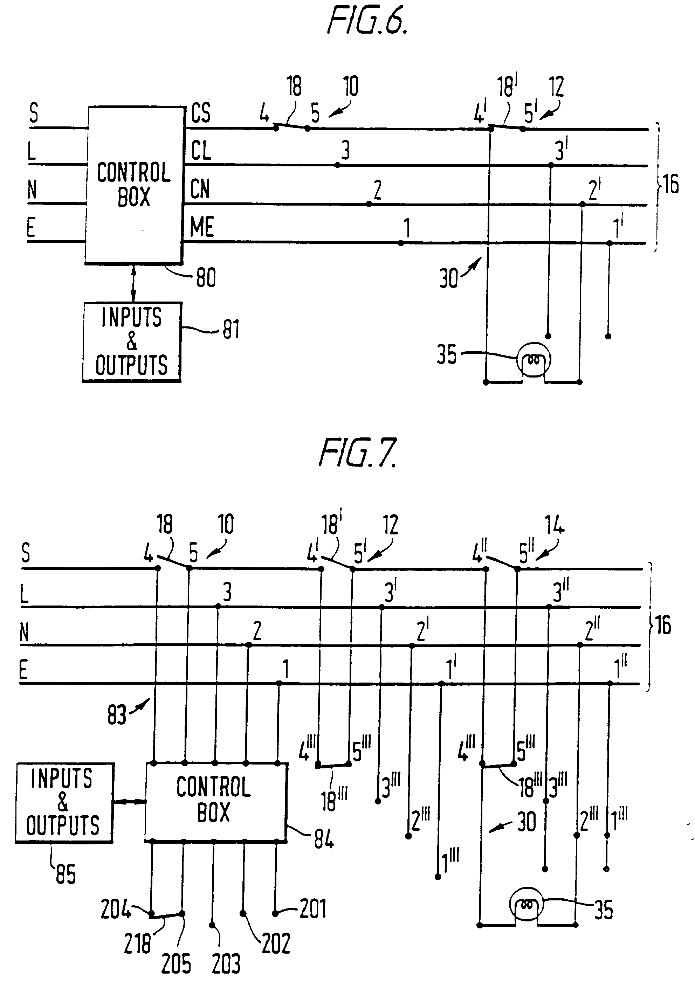

In Fig. 6 and adaptor 80 is plugged into busbar 16 across lines S, L, N and E having switching means in the adaptor 80 such as a residual circuit breaker so as to permit the carrying out of logical operations between any one or more components 81 such as lighting or power devices associated with the system.

In Figure 7 an adaptor with a first type outlet connector 83 (or plug) is plugged into outlet socket 10. The adaptor has an outlet 201-205 and electrical switching means 84 in the control box between the outlet 201-205 and connector 83 so as to permit the carrying out of logical operations including AND, OR and XOR between electrical signals present upon the connector or outlet or any one or more components 81. Switch 18 in line S is broken by insertion of connector 83 into the busbar 16.

In Figure 8 an adaptor 86 with a varied first type outlet connector 87 is plugged into outlet socket 10. Connector 87 may or may not operate switch 18 in line S of busbar 16 depending on the operation of adaptor 86 by control box 88 and switching means 89. The connector 87 is effectively of the first or second type since it may or may not open switch 18. The adaptor 86 therefore has at least one of the connectors and has electrical switching means 89 interposed between connections to, or point 5 and 4 in the system so as to permit the carrying out of logical operations between an electrical signal present on any connection and an electrical, mechanical, optical or other input to the system via switching means 89.

It will be appreciated that the system has outlets and connectors such that when they are connected to one of the outlets the functionality of that outlet may be jumped either to a second outlet along the busbar or from busbar to adjacent busbar and if desired to further busbars.

The present invention provides a system particularly useful for large office areas where the busbars 16, 116 and so on are fixed either directly to the ceiling or in a ceiling space with downward extensions as described with reference to Figure 2. The outlets on the busbars can be controlled by any suitable means plugged into the same or different such busbars and this switching can be arranged to control with components readily plugged into the outlets any number of other system outlets in blocks or lines, with the option of even leaving a single light on as an emergency light. The arrangement of outlets and controls of the system can be quickly rearranged. Control can always be arranged wherever it is most convenient.

## Claims

1. A system of electrical outlets and connectors comprising a plurality of electrical outlets (10,12,..) which are interconnected electrically, each outlet having a plurality of contacts (2,2'.., 3,3'.. ,4,4'..,5,5'..) for a power supply characterised in that a first type (20) and a second type (30) of outlet connector are provided and in that each outlet has a switching means (18,18'..) permanently provided to normally electrically connect two contacts (4,5) of the outlet, the switching means being operable by the connection or disconnection of the first type of outlet connector to or from the outlet whilst the connection or disconnection of the second type of outlet connector to or from the outlet will leave the electrical connection of the two contacts intact.

2. A system as claimed in claim 1 in which the outlets are mounted on a linear support structure (16).

3. A system as claimed in claim 1 or 2 in which an adaptor (80) is provided, the adaptor comprising a means for connection to the system and having electrical switching means so as to permit the carrying out of logical operations between any one or more electrical components (81) associated with the system.

4. A system as claimed in any one of claims 1 to 3 in which an adaptor is provided, the adaptor comprising a said first type of outlet connector (83) and an outlet (201-205) and having electrical switching means (84) interposed between said first type of outlet connector and said outlet so as to permit the carrying out of logical operations including AND, OR and XOR between electrical signals present upon the outlet connector or outlet.

5. A system as claimed in any one of the preceding claims in which an adaptor (86) is provided, the adaptor comprising one of the outlet connectors (87) and having electrical switching means (89) interposed between connections to the system so as to permit the carrying out of logical operations between an electrical signal present on any of said contacts and an electrical, mechanical, optical or other input to the system.

6. A system as described in any one of the preceding claims in which an adaptor is provided connectable to an outlet, the adaptor additionally incorporating a timing mechanism .

7. A system as described in any one of the preceding claims in which an adaptor is provided, the adaptor additionally incorporating a means (20') of varying or modulating an electrical supply to one or more of said contacts.

8. A system as claimed in any one of the preceding claims comprising another said outlet (112) and another said first type of outlet connector (72) connected electrically to one another, said another outlet connector and said another outlet being arranged such that when they are connected to a said outlet the functionality of that outlet is transferred to said another outlet.

## Patentansprüche

1. System mit elektrischen Dosen und Anschlüssen, umfassend eine Vielzahl von elektrischen Dosen (10, 12, ..), die elektrisch miteinander verbunden sind, wobei jede Dose eine Vielzahl von Kontakten (2, 2' .., 3, 3' .., 4, 4' .., 5, 5' ..) für eine Stromversorgung hat, dadurch gekennzeichnet, daß ein erster Dosenanschlußtyp (20) und ein zweiter Dosenanschlußtyp (30) vorgesehen ist, daß jede Dose Schaltmittel (18, 18' ..) besitzt, die normalerweise ständig zwei Kontakte (4, 5) der Dose elektrisch verbinden, daß die Schaltmittel durch das Verbinden oder Trennen des ersten Dosenanschlußtyps mit der bzw. von der Dose betätigbar sind, während das Verbinden oder Trennen des zweiten Dosenanschlußtyps mit der bzw. von der Dose die elektrische Verbindung der beiden Kontakte unberührt läßt.

2. System nach Anspruch 1, bei dem die Dosen an einer linearen Tragkonstruktion (16) angebracht sind.

3. System nach Anspruch 1 oder 2, bei dem ein Adapter (80) vorgesehen ist, der Mittel zum Anschluß an das System umfaßt und elektrische Schaltmittel besitzt, um logische Operationen zwischen einer oder mehreren, dem System zugeordneten elektrischen Komponenten (81) durchführen zu können.

4. System nach einem der Ansprüche 1 bis 3, bei dem ein Adapter vorgesehen ist, der einen ersten Dosenanschlußtyp (83) und eine Dose (201-205) enthält, und der elektronische Schaltmittel (84) besitzt, die zwischen dem ersten Dosenanschlußtyp und der Dose angeordnet sind, um so logische Operationen wie UND, ODER oder XOR zwischen elektrischen Signalen durchführen zu können, die am Dosenanschluß oder an der Dose vorhanden sind.

5. System nach einem der vorhergehenden Ansprüche, bei dem ein Adapter (86) vorgesehen ist, der einen der Dosenanschlüsse (87) enthält, und der elektrische Schaltmittel (89) besitzt, die zwischen Verbindungen mit dem System angeordnet sind, um so logische Operationen zwischen einem an einem der Kontakte vorhandenen elektrischen Signal und einem elektrischen, mechanischen, optischen oder einem anderen Eingang zu dem System durchführen zu können.

6. System nach einem der vorhergehenden Ansprüche, bei dem ein an eine Dose anschließbarer Adapter vorgesehen ist, der zusätzlich einen Zeitgebermechanismus enthält.

7. System nach einem der vorhergehenden Ansprüche, bei dem ein Adapter vorgesehen ist, der zusätzlich Mittel (20') enthält, um eine elektrische Versorgung zu einem oder mehreren der Kontakte zu verändern oder zu modulieren.

8. System nach einem der vorhergehenden Ansprüche, das eine weitere Dose (112) und einen weiteren mit dieser elektrisch verbundenen ersten Dosenanschlußtyp umfaßt, wobei der weitere Dosenanschluß und die weitere Dose so angeordnet sind, daß sie bei Anschluß an eine Dose die Funktionalität dieser Dose auf die weitere Dose übertragen.

## Revendications

1. Système comportant des prises de courant électrique et des connecteurs, comprenant plusieurs prises (10,12...) de courant électrique reliées électriquement les unes aux autres, chaque prise ayant plusieurs contacts (2,2'.., 3,3'.., 4,4'.., 5,5'..) pour une alimentation en courant, caractérisé en ce qu'un premier type (20) et un second type (30) de connecteur de prise sont présents et en ce que chaque prise a un moyen de commutation (18,18'..) disposé de manière permanente pour, dans des conditions normales, connecter électriquement deux contacts (4,5) de la prise, le moyen de commutation étant actionnable par la connexion ou la déconnexion du premier type de connecteur de prise à ou d'avec la prise, tandis que la connexion ou la déconnexion du second type de connecteur de prise à ou d'avec la prise laisse inchangée la connexion électrique des deux contacts.

2. Système selon la revendication 1, dans lequel les prises sont montées sur une structure de support linéaire (16).

3. Système selon la revendication 1 ou 2, dans lequel un adaptateur (80) est présent, l'adaptateur comportant un moyen pour la connexion avec le système et ayant un moyen de commutation électrique de façon à permettre l'exécution d'opérations logiques entre n'importe lesquels ou plusieurs des composants électriques (81) associés au système.

4. Système selon l'une quelconque des revendications 1 à 3, dans lequel un adaptateur est présent, l'adaptateur comprenant un connecteur (83) de prise dudit premier type et une prise (201-205) et ayant un moyen de commutation électrique (84) intercalé entre ledit premier type de connecteur de prise et ladite prise de façon à permettre l'exécution d'opérations logiques comprenant des opérations ET, OU et OU EXCLUSIF entre des signaux électriques présents dans le connecteur de prise ou la prise.

5. Système selon l'une quelconque des revendications précédentes, dans lequel un adaptateur (86) est présent, l'adaptateur comportant un des connecteurs (87) de prise et ayant un moyen de commutation électrique (89) intercalé entre des connexions au système de façon à permettre l'exécution d'opérations logiques entre un signal électrique présent à l'un quelconque desdits contacts et une entrée électrique, mécanique, optique ou autre du système.

6. Système selon l'une quelconque des revendications précédentes, dans lequel un adaptateur pouvant être connecté à une prise est présent, l'adaptateur comprenant en outre un mécanisme de synchronisation.

7. Système selon l'une quelconque des revendications précédentes dans lequel un adaptateur est présent, l'adaptateur comprenant en outre un moyen (20') de variation ou de modulation d'une alimentation en courant d'un ou plusieurs desdits contacts.

8. Système selon l'une quelconque des revendications précédentes, comportant une autre prise (112) et un autre connecteur (72) de prise dudit premier type connectés électriquement l'un à l'autre, ledit autre connecteur de prise et ladite autre prise étant agencés de façon que lorsqu'ils sont connectés à une prise la fonctionnalité de cette prise est transmise à ladite autre prise.
